# EUROPÄISCHE PATENTSCHRIFT

(11) **EP 0 834 475 B1**
(45) Veröffentlichungstag und Bekanntmachung des Hinweises auf die Patenterteilung: **07.11.2001**
(21) Anmeldenummer: 97116675.6
(22) Anmeldetag: 25.09.1997
(51) Int. Cl.: C02F 3/12, C02F 3/00

(54) **Verfahren und Anordnung zum Abbau organischer Abwasser-Schadstoffe**
Process and installation for the degradation of organic contaminants in waste waters
Procédé et installation pour la dégradation des contaminants organiques dans les eaux usées

(30) Priorität: 04.10.1996 DE 19640899
(43) Veröffentlichungstag der Anmeldung: 08.04.1998
(73) Patentinhaber: STEAG encotec GmbH, 45128 Essen (DE)
(72) Erfinder: Besten, Hans-Werner, Dipl.-Ing., 58332 Schwelm (DE)

(56) Entgegenhaltungen:
- EP-A- 0 695 720
- DE-A- 3 227 488
- DE-A- 4 024 947
- PATENT ABSTRACTS OF JAPAN vol. 017, no. 321 (C-1072), 18. Juni 1993 & JP 05 031488 A (SUMITOMO JUKIKAI ENVIROTEC KK;OTHERS: 01), 9. Februar 1993

## Beschreibung

Die Erfindung bezieht sich auf ein Verfahren und eine Anordnung zum Abbau organischer Abwasser-Schadstoffe unter Verwendung frei suspendierter Bakterien nach dem Oberbegriff des Patentanspruchs 1 bzw. des Patentanspruchs 8.

Im Zuge der verstärkten Trink- und Grundwasserproblematik wird die Aufbereitung von Abwasser, insbesondere der Abbau organischer Abwasser-Schadstoffe immer wichtiger. Im kommunalen Bereich wurden die dem Verursacher belasteten Abwasserkosten nach den Schadstoff-Spitzenwerten berechnet. Hohe Schwankungen in der Abwasserkonzentration führen daher zu erheblichen Abwasser-Kostensteigerungen. Viele Industrieunternehmen, insbesondere solche mit stark schwankenden Abwasserkonzentrationen, legen aus Kostengründen die Abwasserreinigung unmittelbar an die Quelle des Abwasseranfalls. Dadurch können kommunale Kläranlagen entlastet und Abwassergebühren eingespart werden.

Zum Abbau organischer Schmutzfrachten bei hochkonzentrierten Abwässern haben sich sogenannte partiell-aerobe Verfahren bewährt, bei denen die Belüftung des Abwassers und gegebenenfalls die Zugabe von Minimumstoffen zum Abwasser unter Steuerung des Redoxpotentials erfolgt. Unter den Bedingungen des partiell-aeroben Verfahrens sind bekanntlich besonders die Enzyme der Atmungskette der Bakterien bzw. Mikroorganismen aktiv. Nur ein vergleichsweise geringer Teil der Schadstoffe wird für den Aufbau von Biomasse genutzt. Der überwiegende Teil der Schadstoffe wird direkt in Kohlendioxyd (CO₂) und Wasser (H₂O) umgesetzt. Wichtig ist, daß die zugeführte Luftmenge so dosiert wird , daß die Bakterien das Redoxpotential ihres Mediums in optimale und atmungsaktive Bedingungen führen können. Es wurde gefunden, daß es bei einer Anhebung des Redoxpotentials durch Erhöhung der Luftzufuhr zu "einer verstärkten Flockenbildung kommen kann. Eine Absenkung des Redoxpotentials unterhalb von -300 mV vermindert zwar die Gefahr einer Flockenbildung, verschlechtert aber häufig den Abbauwirkungsgrad der Bakterien.

Aus der DE-OS 32 27 488 ist ein partiell aerobes Verfahren bekannt, bei dem das Redoxpotential auf einen möglichst konstanten Wert zwischen -200 mV und -300 mV und der pH-Wert ebenfalls im wesentlichen konstant im Bereich zwischen 7,0 und 9,0, vorzugsweise 8,0 bis 8,1 eingestellt werden sollen.

In der Praxis hat sich jedoch gezeigt, daß mit dem bekannten partiell-aeroben Verfahren kritische Konzentrationsschwankungen und vor allem Änderungen der pH-Werte im Abwasser nicht optimal beherrschbar waren, und die Abbauaktivität der Mikroorganismen u.U. verringert wird.

Der Erfindung liegt die Aufgabe zugrunde, das bekannte partiell-aerobe Verfahren und die Anordnung zu dessen Durchführung so zu verbessern, daß eine äußerst hohe, unter Umständen sogar optimale Abbaurate der Schadstoffe ohne beachtliche Flockenbildung selbst bei starken pH-Wert-Schwankungen des Abwassers erreicht wird.

Die Erfindung geht bei der Lösung dieser Aufgabe von der Erkenntnis aus, daß die Bakterien bzw. Mikroorganismen bei schwankenden pH-Werten ihre volle Abbauaktivität entfalten, wenn eine bestimmte Beziehung zwischen den Redoxpotential-und pH-Werten aufrechterhalten wird. Mit anderen Worten, Redoxpotential und pH-Wert brauchen nicht konstant gehalten zu werden, sofern ihre Änderung in gegenseitiger Abhängigkeit durchgeführt wird.

Verfahrensmäßig ist die Erfindung zur Lösung der ihr zugrundeliegenden Aufgabe dadurch gekennzeichnet,
a) daß verschiedenen pH-Werten zugeordnete Redoxpotentialwerte ermittelt werden, bei denen Schadstoffe im Reaktor optimal biologisch abgebaut werden;
b) daß aus den ermittelten Werten eine Kennlinie gebildet und gespeichert wird;
c) daß aus den betrieblich gemessenen pH-Werten (pH-Ist-werten) und den Kennlinienwerten in einem Prozeßrechner eine Führungsgröße gebildet und mit betrieblich gemessenen Redoxpotentialwerten (Redoxpotential-Istwerten) verglichen wird; und
d) daß die zugeführte Luftmenge in Abhängigkeit von den Redoxpotential-Istwerten unter Führung der pH-Istwerte geregelt wird.

Die Erfindung unterstützt die Mikroorganismen-Kultur darin, nach starken pH-Wert Änderungen relativ kurzfristig einen Gleichgewichts-pH-Wert einzustellen. Zu diesem pH-Wert gehört ein vorgegebenes Redoxpotential, das durch Regelung der Menge an zugeführter Luft, d.h. an zugeführtem Luftsauerstoff eingestellt wird.

Wie oben gesagt, werden pH-Wert und Redoxpotential automatisch so aufeinander abgestimmt, daß die Mikroorganismen optimale Lebensbedingungen im Reaktionsraum und im Abwasser vorfinden. Sinkt der pH-Wert beispielsweise auf 6,9 ab, so wird unter Änderung des zugeführten Luftsauerstoffs das Redoxpotential auf einen entsprechend geänderten Wert, z.B. - 150 mV geregelt. Es wurde gefunden, daß jedem pH-Wert ein für die Aktivität der Mikroorganismen optimales Redoxpotential zugeordnet ist. Diese Kennlinie des pH-Werts in Zuordnung zum entsprechenden Redoxpotential läßt sich ohne Schwierigkeiten vorausbestimmen, speichern und während der Regelung zur Bildung der Führungsgröße aus dem Speicher abrufen.

Mit Hilfe des erfindungsgemäßen Verfahrens gelingt es, auch bei relativ stark schwankenden pH-Werten die Menge der zugeführten Luft so zu regeln, daß sich keine Flocken bilden. Es wird aber hinreichend viel Luftsauerstoff zur Verfügung gestellt, um einen ausreichenden Energiegewinn der Bakterien über deren Atmungskette zu gewährleisten. Dabei vermehren sich die Bakterien in dem Maße, daß Verluste durch Verdünnung bei neuer Abwasserzufuhr und durch Abführen von vorgeklärter Lösung ausgeglichen werden. Es kann den Bakterien dabei stets ausreichend Luftsauerstoff zur Verfügung gestellt werden, damit sie organische Schmutzfrachten wirksam veratmen und dementsprechend vermindern können. Änderungen des pH-Wertes ändern bei dem erfindungsgemäßen Verfahren nichts oder nur wenig an der Abbauaktivität der Mikroorganismenkultur im Reaktor. Unter diesen Bedingungen kann sich die Mikroorganismenkultur extrem schnell an Konzentrations-und Schadstoffänderungen anpassen. Die Generationszeit der Mikroorganismen beträgt ca. einen Tag.

Die Anordnung zur Durchführung des erfindungsgemäßen Verfahrens ist durch die Merkmale des Patentanspruchs 8 gekennzeichnet.

Wesentlich ist, daß ein Prozeßrechner mit den pH-Wert und das Redoxpotential laufend messenden Mitteln sowie mit einem die Luftmenge steuernden Stellglied gekoppelt ist und eine Speichereinrichtung aufweist und daß der Prozeßrechner so ausgebildet ist, daß er die dem Abwasser zugeführte Luftmenge in Abhängigkeit von den gemessenen Redoxpotentialwerten unter Führung der gemessenen pH-Werte nach einer in der Speichereinrichtung gespeicherten vorgegebenen Beziehung regelt. Die Abbaubedingungen im Reaktionsraum werden mit Hilfe dieser Anordnung laufend so eingestellt, daß die Mikroorganismenkultur optimale Luftsauerstoffbedingungen bzw. ein optimales Redoxpotential vorfindet.

Vorteilhafte Weiterbildungen der Erfindung sind in den Unteransprüchen gekennzeichnet.

Die Regeleinrichtung sollte vorzugsweise so ausgebildet sein, daß sich das Redoxpotential mit einer Genauigkeit von ±20 mV auf den zum pH-Istwert gehörigen optimalen Redoxpotentialwert einstellt.

Ein großer Vorteil des erfindungsgemäßen Verfahrens und der zugehörigen Anordnung besteht darin, daß dem Reaktionsraum hoch- und höchstbelastete Abwässer mit großen Schwankungsbreiten des pH-Werts zugeführt werden können. Die CSB-Konzentration kann von 3.000 bis über 100.000 mg O₂/l betragen. Selbst bei stark unterschiedlichen pH-Werten findet der Abbau der organischen Schadstoffe mit gleichbleibender Intensität statt, so daß sich das erfindungsgemäße Verfahren durch eine außergewöhnliche Stabilität auszeichnet. Der pH-Wert der Abwässer kann in Extremfällen zwischen 3 und 12 betragen, ohne daß wesentliche Neutralisationsmaßnahmen notwendig werden.

Im folgenden wird die Erfindung anhand eines in der Zeichnung schematisch dargestellten Ausführungsbeispiels näher erläutert. In der Zeichnung zeigen:
- Fig. 1: ein Prinzipschaltbild der erfindungsgemäßen Anordnung zum Abbau organischer Abwasser-Schadstoffe; und
- Fig. 2: eine Kennlinie, welche die Beziehung zwischen pH- und Redoxpotential-Werten zur Einstellung optimaler Abbaubedingungen im Abwasser bei 37°C veranschaulicht.

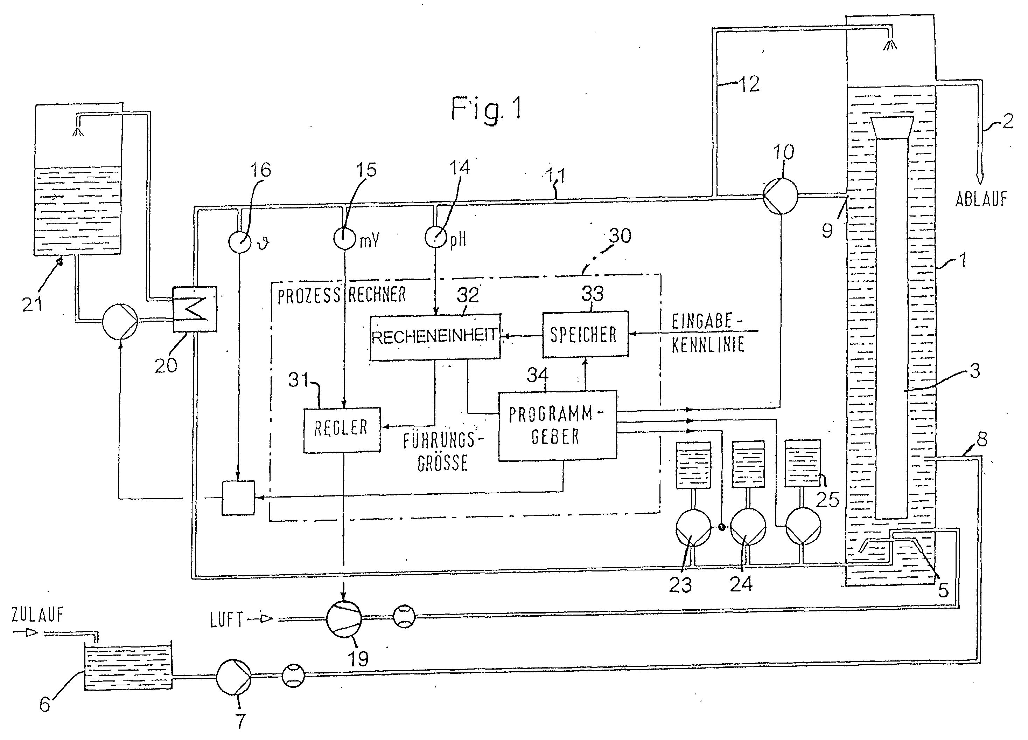

Die erfindungsgemäße Abwasserreinigung findet in dem in Fig. 1 dargestellten Ausführungsbeispiel in einem Hochreaktor 1 statt. Dieser ist bis etwa zur Höhe eines Ablaufs 2 mit dem zu reinigenden Abwasser gefüllt. In dem Hochreaktor 1 ist mit allseitigem Abstand ein Innenrohr 3 mit im wesentlichen vertikaler Achse angeordnet. Das Innenrohr 3 ist ansich zylindrisch, weist aber am oberen Ende einen Einlauftrichter auf. Mit Abstand unterhalb des offenen Endes des Innenrohrs 3 ist eine Belüftungsdüsenanordnung 5 vorgesehen. Durch die Belüftungsdüsenanordnung 5 wird in einer weiter unten beschriebenen Weise Behandlungsluft im wesentlichen gleichmäßig verteilt und nach unten in das zu reinigende Abwasser eingeleitet. Die resultierenden Luftbläschen steigen in gleichmäßiger Verteilung vornehmlich außerhalb des Innenrohrs nach oben, wodurch im praktisch blasenfreien Innenrohr durch den Dichteunterschied eine abwärts gerichtete Strömung entsteht. Untersuchungen haben gezeigt, daß eine Strömungsgeschwindigkeit im inneren des Innenrohrs 3 von 2,5 bis 3,5 m/s zu guten Ergebnissen führt. Die Bewegung des Wasser-Luftgemisches unterhalb des Innenrohrs verhindert Ablagerungen und Verstopfungen im Bodenbereich des Hochreaktors 1.

Die relativ große Höhe des Wasserspiegels innerhalb des Hochreaktors 1 begünstigt die Ausnutzung des durch die Sprühanordnung 5 zugeführten Sauerstoffs. Bei einer Höhe von 7 m Wassersäule beträgt die Sauerstoffausnutzung ca. 55 %. Ab ca. 14 m Wassersäule erhöht sich die Sauerstoffausnutzung auf Werte über 90 %.

Das anhand von Fig. 1 beschriebene partiell-aerobe Verfahren verhält sich außerordentlich stabil. Dies liegt vor allem daran, daß die Bakterien individualisiert gehalten werden und dadurch rascher wachsen können als vergleichbare Bakterien innerhalb einer Belebtschlammflocke. Die Population an Mikroorganismen im Hochreaktor 1 kann sich innerhalb von wenigen Stunden verdoppeln und an Konzentrationssprünge oder unterschiedliche Inhaltsstoffe anpassen. Eine zusätzliche Vergleichmäßigung der Schadstoffe läßt sich durch einen Vorlagebehälter 6 erreichen, der aber, wie die folgende Beschreibung zeigen wird, in vielen Fällen überflüssig ist. Aus dem Vorlagebehälter 6 wird das zu reinigende Abwasser über eine Pumpe 7 und einen Zulauf 8 in den Innenraum des Hochreaktors 1 eingeleitet. Der Zulauf 8 mündet in den Ringraum zwischen Reaktorwand und Innenrohr 3.

An einer Stelle 9 des Hochreaktors, an der das Reaktorabwasser eine für die Verfahrensführung repräsentative Zusammensetzung hat, wird eine Teilströmung des Abwassers von einer Förderpumpe 10 in einen zu Meß- und Steuerzwecken dienenden Beipass 11 abgesaugt. Ein anderer Teilstrom wird hinter der Umwälzpumpe 10 abgezweigt und über eine Stichleitung 12 in den Bereich oberhalb des Abwasserspiegels des Reaktors 1 eingeleitet und von dort auf den Wasserspiegel aufgesprüht. Dadurch gelingt es, eine Schaumbildung auf der ohnehin kleinen Oberfläche des Hochreaktors weitgehend zu verhindern.

Entlang der Beipassleitung wird das abgezweigte Abwasser an verschiedenen Meßfühlern 14, 15 und 16 vorbeigeführt, über einen Wärmetauscher 20 eines Kühlkreislaufes geleitet und ggfs. dort temperiert, an Neutralisationsmittel-Dosierstellen 23 und 24 und einer Nährstoff-Zugabestation 25 vorbei und in eine Mischkammer zum Mischen mit der Luft aus der Verteileranordnung 5 eingeleitet.

Von den Meßfühlern 14 und 15 wird der pH-Wert bzw. der Redoxpotentialwert gemessen. Der pH-Wert liegt für das partiell-aerobe Verfahren optimal zwischen den Werten 7 und 9. Das partiell-aerobe Verfahren bildet ein ausgezeichnetes Puffersystem und hält den pH-Wert auch ohne Zufuhr von Neutralisationsmitteln (Dosiervorrichtungen 23 und 24) innerhalb des Sollbereichs. Die organischen Säuren werden durch die Mikroorganismen abgebaut, und alkalische Substanzen, wie NaOH werden durch das gebildete CO₂ gepuffert. Vornehmlich im Anfahrbetrieb oder bei empfindlichen Störungen der Mikroorganismenpopulation z.B. durch Giftstöße, kann eine Zudosierung von Neutralisationsmitteln (23 oder 24) notwendig werden. Diese werden allerdings erst bei extremen pH-Werten, z.B. kleiner 3 oder größer 12, zudosiert.

Nach solchen Giftstößen kann das erfindungsgemäße partiell-aerobe Verfahren fortgesetzt werden, ohne mit frischen Mikroorganismen angeimpft werden zu müssen. Es müssen nur der pH-Wert und die Temperatur kurzfristig in einem mittleren Bereich gehalten werden, und die Population der Mikroorganismen regeneriert sich innerhalb von 24 Stunden.

Der wesentliche Parameter des partiell-aeroben Verfahrens ist das Redoxpotential, welches an der Meßstelle 15 gemessen wird. Man kann das Redoxpotential als das Maß für die Bereitschaft des Mediums zur weiteren Sauerstoffaufnahme ansehen. Es wurde gefunden, daß ein günstiger Redoxpotentialwert für den Betrieb des partiell-aeroben Verfahrens zwischen -200 und -300 mV liegt. In diesem Bereich treten nur selten Belebtschlammflocken auf. Dennoch ist in dem Abwasser im Innenraum des Hochreaktors 1 eine durchaus aktive Mikroorganismenpopulation anzutreffen. Diese Mikroorganismenpopulation besteht, wie eine mikroskopische Untersuchung zeigt, fast ausschließlich aus Bakterien.

Bekanntlich werden die Schadstoffe im Abwasser unter angemessenen Bedingungen in Gegenwart der Biomasse deutlich abgebaut. Die Abbaurate ist abhängig von den Inhaltsstoffen und der Abwasserkonzentration. Eine optimale Veratmungsleistung gibt es erst bei hohen Abwasserkonzentrationen, beispielsweise ab einem CSB-Wert von ca. 5000 mg/l.

Wie oben gesagt, ändert man die Menge des zugeführten Luftsauerstoffs in Abhängigkeit von dem am Meßgerät 15 gemessenen Redoxpotentialwert. Die Erfindung geht von der Erkenntnis aus, daß eine gegenseitige Abhängigkeit zwischen pH-Wert und Redoxpotentialwert besteht und bei der Regelung der Luftzufuhr durch die Dosierpumpe 19 berücksichtig und aufrechterhalten werden muß. Nur so lassen sich auf höchst einfache Weise starke Schwankungen des behandelten Abwassers kompensieren und optimale Bedingungen im Dauerbetrieb im Hochreaktor 1, verbunden mit einer hohen Abbauleistung, gewährleisten.

Zu diesem Zweck ist bei dem Ausführungsbeispiel gemäß Fig. 1 ein Prozeßrechner 30 vorgesehen, zu dem ein Regler 31, eine Recheneinheit 32 und ein Speicher 33 sowie ein Programmgeber 34 gehören. Im Regler 31 wird der durch die Redoxmessung gewonnene Redoxpotentialwert aber nicht einfach mit einem konstanten Sollwert, sondern mit einer von dem pH-Istwert abhängigen Führungsgröße in Beziehung gesetzt. Die Führungsgröße wird in der Recheneinheit 32 aus dem pH-Istwert mit Hilfe der im Speicher 33 gespeicherten Kennlinie gewonnen.

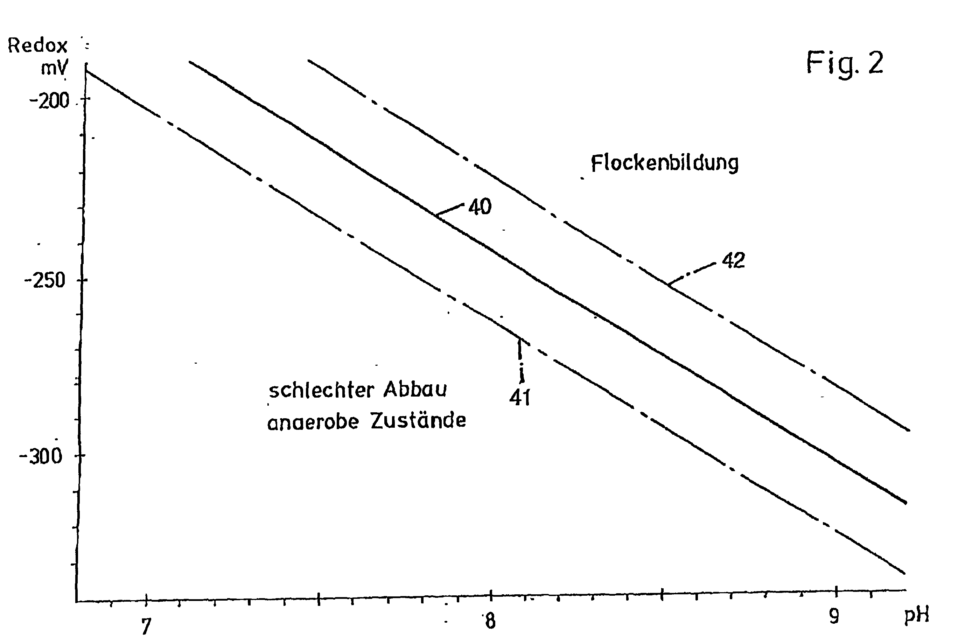

Die Kennlinie mit der Sollbeziehung zwischen pH-Wert und Redoxpotenialwert ist in Fig. 2 der Zeichnung schematisch dargestellt. Die Kennlinie ist in dem hier angegebenen pH-Bereich eine Gerade mit einer zuvor durch Untersuchungen bestimmten Steigung (im Beispiel ca. 88 mV pro pH bei 37°C). Zu beiden Seiten der Kennlinie 40 ist ein von jeweils strichpunktierten Linen 41 und 42 begrenztes Toleranzfeld angegeben, in welchem die Mikroorganismenpopulation ohne schädliche Nebeneffekte eine hohe Abbauleistung erbringt. Bei zu negativem Redoxpotential ergeben sich, wie Fig. 2 zeigt, schlechte Abbauverhältnisse und anaerobe Zustände. Zur anderen Seite hin kommt es bei Überschreiten der Grenze 42 zu einer zunehmenden Flockenbildung.

Wichtig ist, daß mit Hilfe des Prozessrechners 30 dafür gesorgt wird, daß selbst bei stark schwankenden pH-Werten das Redoxpotential und damit die Luftzufuhr den schwankenden pH-Werten folgen. Die richtige Kennlinie 40 und ggfs. auch die Grenzen 41 und 42 sind bei dem beschriebenen Beispiel vor Betriebsbeginn in den Speicher 33 eingegeben. Der Speicher 33 ist programmierbar.

Bekanntlich soll die Temperatur beim partiell-aeroben Verfahren im Bereich zwischen 20 - 40°C, optimalerweise zwischen 35 und 39°C liegen. Beim Abbau der Schadstoffe wird unter den Bedingungen des partiell-aeroben Verfahrens Energie freigesetzt. Bei hohem CSB-Gehalt von beispielsweisen 10.000 mg/l liegt die Abwassertemperatur bei nahezu 42°C. Bei dieser Temperatur sind die Mikroorganismen nicht mehr lebensfähig. In dem in Fig.1 dargestellten Ausführungsbeispiel kann das Abwasser im Beipass 11 über den Wärmetauscher 20 auf eine geeignete Solltemperatur gekühlt werden. Solltemperatur und Kühltakt werden durch den Programmgeber 34 gesteuert, der auch bei Bedarf für die Betätigung der Nährstoffdosierung und der Neutralisationsmittel sorgt.

Die Mikroorganismen benötigen nicht nur die Schmutzfracht als Nahrung und den Luftsauerstoff zur Vermehrung, sondern sie sind auch auf eine Reihe von Nährstoffen angewiesen. Zu letzteren gehören insbesondere Stickstoffe und/oder Phosphor. Untersuchungen haben gezeigt, daß die Zudosierung von ca. 15g Stickstoff und/oder 5g Phosphor pro kg abzubauendem CSB zu günstigen Ergebnissen führt. Die Dosierung kann dabei vereinfacht werden, wenn der Stickstoff in Form von Salpetersäure und Phosphar in Form von Phosphorsäure zugeführt wird. Zu den Nährstoffen zählen weiterhin Spurenelemente. Letztere enthalten alle für die kanalytische Aktivität der Enzymene nötigen Ionen in Form von Salzen.

Die Zugabe von Nährstoffen zu dem Abwasser erfolgt in solchen Mengen, daß die durch die Verdünnung entstehenden Verluste an Mikroorganismen ausgeglichen werden. Die Menge der zugefügten Nährstoffe ist bei dem beschriebenen Verfahren proportional zur Menge des zugefügten Abwassers bzw. zur Schmutzfracht, gemessen in CSB.

Auch nach Austritt des Abwassers über den Ablauf 2 sind im Abwasser Mikroorganismen enthalten, die gut abbaubar sind. Sie werden in einer Kläranlage entweder in den Klärschlamm integriert und helfen beim Abbau des Rest-CSB oder werden von den Filtereinrichtungen des Belebtschlamms, den höheren Mikroorganismen, eliminiert.

Die Mikroorganismen können bei der Erfindung aus dem vorgeklärten Abwasser abgetrennt werden. Dies ist beispielsweise durch Fällung mit Eisen möglich. Dabei ergibt sich eine vergleichsweise geringe Schlammenge. Der Vorteil des beschriebenen Verfahrens liegt allerdings in einer deutlich höheren Reinigungsleistung von über 90% des CSB.

Das erfindungsgemäße Verfahren hat den Vorteil, das hochbelastete Abwässer mit zum Teil erheblichen Schwankungen in ihrer Zusammensetzung und im pH-Wert, die in einer Kläranlage zu Störungen führen können vergleichmäßigt und in bisher nicht erreichbarer Weise gereinigt werden können.

Im Rahmen des Erfindungsgedankens sind zahlreiche Abwandlungen möglich. So können etwa die Belüftungsdüsen im Reaktor anders angeordnet werden, solange die abwärts gerichtete Strömung im Innenrohr erhalten bleibt. Selbstverständlich können die Komponenten der Anordnung anders angeordnet sein, als dies in Fig. 1 dargestellt ist. Die Nährstoffe und Neutralisationsmittel können z.B. auch dem Zulauf direkt zugegeben werden. Auch die Zusammensetzung der Nährstoffe kann eine andere sein.

Die Abhängigkeit von Redoxpotential und pH-Wert kann durch zahlreiche alternative Anordnungen realisiert werden. So kann auf die Recheneinheit 32 und den gesonderten Speicher verzichtet werden, wenn der Regler 31 mit einer einstellbaren Korrektureinrichtung versehen ist, die den pH-Istwert entsprechend der voreingestellten Kennliniensteigung in die benötigte Führungsgröße umsetzt.

## Patentansprüche

1. Verfahren zum Abbau organischer Abwasser-Schadstoffe unter Verwendung frei suspendierter Bakterien,
wobei das Abwasser in einem Reaktionsraum umgewälzt und belüftet wird,
die zugeführte Luftmenge entsprechend den Behandlungsbedingungen des Abwassers geregelt wird und
Redoxpotential- und pH-Werte überwacht werden,
**dadurch gekennzeichnet,**
a) daß verschiedenen pH-Werten zugeordnete Redoxpotentialwerte ermittelt werden, bei denen Schadstoffe im Reaktor optimal biologisch abgebaut werden;
b) daß aus den ermittelten Werten eine Kennlinie gebildet und gespeichert wird;
c) daß aus den betrieblich gemessenen pH-Werten (pH-Ist-werten) und den Kennlinienwerten in einem Prozeßrechner eine Führungsgröße gebildet und mit betrieblich gemessenen Redoxpotentialwerten (Redoxpotential-Istwerten) verglichen wird; und
d) daß die zugeführte Luftmenge in Abhängigkeit von den Redoxpotential-Istwerten unter Führung der pH-Istwerte geregelt wird.

2. Verfahren nach Anspruch 1, **dadurch gekennzeichnet, daß** eine Teilmenge des Abwassers aus dem Reaktionsraum abgezweigt, über einen Meß- und Steuerbeipass geleitet und an einer anderen Stelle wieder in den Reaktionsraum zurückgeführt wird; und daß Prozeßvariable, z.B. pH-, Redoxpotential- und Temperatur-Istwerte in dem Meß- und Steuerbeipass gemessen werden.

3. Verfahren nach Anspruch 2, **dadurch gekennzeichnet, daß** die Temperatur des Abwassers im Meß- und Steuerbeipass geregelt wird.

4. Verfahren nach Anspruch 3, **dadurch gekennzeichnet, daß** das Abwasser im Reaktionsraum auf einer Temperatur im Bereich von 20 - 40°C, vorzugsweise zwischen 35 und 39°C gehalten wird.

5. Verfahren nach einem der Ansprüche 1 bis 4, **dadurch gekennzeichnet, daß** als Reaktionsraum ein Hochreaktor verwendet wird, in dessen Bodenbereich die geregelte Luftmenge im wesentlichen gleichmäßig verteilt zugeführt und mit dem zu behandelnden umgewälzten Abwasser vermischt wird.

6. Verfahren nach einem der Ansprüche 1 bis 5, **dadurch gekennzeichnet, daß** dem Abwasser für die Vermehrung der Mikroorganismen notwendige Nährstoffe in einem vorgegebenen Verhältnis zur Menge des neu zugeführten Abwassers beigemischt werden.

7. Verfahren nach einem der Ansprüche 1 bis 6, **dadurch gekennzeichnet, daß** Neutralisierungsmittel zugemischt werden, wenn das zugeführte Abwasser einen pH-Wert außerhalb eines Bereichs von 3 bis 12 hat.

8. Anordnung zum Abbau organischer Abwasser-Schadstoffe, insbesondere zur Durchführung des Verfahrens nach einem der Ansprüche 1 bis 7,
**dadurch gekennzeichnet,**
**daß** in einem Hochreaktor (1) ein Reaktionsraum zur Behandlung des Schadstoff-belasteten Abwassers vorgesehen ist;
**daß** der Hochreaktor Mittel zum Zuführen des zu behandelnden Abwassers (6, 7) und zum geregelten Zuführen von Luft (19, 5) aufweist;
**daß** Mittel zum Messen des pH-Werts (14) und des Redoxpotentialwertes (15) des behandelten Abwassers vorgesehen sind;
**daß** ein Prozeßrechner (30) mit den Mitteln zum Messen des pH-Werts und des Redoxpotentials sowie mit einem die zugeführte Luftmenge steuernden Stellglied (19) gekoppelt und mit einer Speichereinrichtung (33) versehen ist; und
**daß** der Prozeßrechner (30) so ausgebildet ist, daß er die dem Abwasser zugeführte Luftmenge in Abhängigkeit von den gemessenen Redoxpotentialwerten (15) unter Führung der gemessenen pH-Werte (14) nach einer in der Speichereinrichtung (33) gespeicherten vorgegebenen Beziehung regelt.

9. Anordnung nach Anspruch 8, **dadurch gekennzeichnet, daß** Mittel (16) zum Messen der Temperatur des behandelten Abwassers und Mittel (20, 21) zur Temperatureinstellung des behandelten Abwassers mit dem Prozeßrechner (30) gekoppelt sind.

10. Anordnung nach Anspruch 8 oder 9, **dadurch gekennzeichnet, daß** das Abwasser über eine Beipassleitung (11) umgewälzt wird, die Beipassleitung in Bodennähe des Reaktionsraums in den Hochreaktor mündet und alle Meßstellen (14 - 16) in der Beipassleitung angeordnet sind.

11. Anordnung nach Anspruch 10, **dadurch gekennzeichnet, daß** Nährstoffdosiermittel (25) und pH-Wert-Neutralisierungsmittel (23, 24) mit der Beipassleitung (11) verbunden sind.

12. Anordnung nach einem der Ansprüche 8 bis 11, **dadurch gekennzeichnet, daß** ein beidseitig offenes Rohr (3) mit allseitigem Abstand vertikal im Hochreaktor eingebaut ist und daß sich das Rohr am oberen Ende trichterförmig erweitert.

13. Anordnung nach einen der Ansprüche 8 bis 12, **dadurch gekennzeichnet, daß** oberhalb des Füllspiegels des Hochreaktors eine Beregnungseinrichtung zum Zerstören von Schaumbläschen angeordnet ist.

## Claims

1. Method of braking down organic waste water pollutants with use of freely suspended bacteria, wherein the waste water is circulated in a reaction chamber and aerated, the supplied air quantity is regulated in correspondence with the treatment conditions of the waste water and the oxidation-reduction potential and pH values are monitored, **characterised in that**
a) oxidation-reduction potential values, at which pollutants in the reactor are optimally biologically degraded, associated with the different pH values are ascertained;
b) a characteristic curve is formed from the ascertained values and stored;
c) a reference magnitude is formed in a process computer from the operationally measured pH values (actual pH values) and the characteristic curve values and are compared with operationally measured oxidation-reduction potential values (oxidation-reduction potential actual values); and
d) the supplied air quantity is regulated in dependence on the oxidation-reduction potential actual values with guidance of the actual pH values.

2. Method according to claim 1, **characterised in that** a partial quantity of the waste water is branched off from the reaction chamber, conducted by way of a measuring and control bypass and fed back at another point into the reaction chamber and that process variables, for example oxidation-reduction potential actual values and temperature actual values, are measured in the measuring and control bypass.

3. Method according to claim 2, **characterised in that** the temperature of the waste water is regulated in the measuring and control bypass.

4. Method according to claim 3, **characterised in that** the waste water is kept in the reaction chamber at a temperature in the range of 20 to 40°C, preferably between 35 and 39°C.

5. Method according to one of claims 1 to 4, **characterised in that** a high reactor is used, into the base region of which the regulated air quantity is supplied in substantially uniform distribution and is mixed with the circulated waste water to be treated, as the reaction chamber.

6. Method according to one of claims 1 to 5, **characterised in that** nutrients necessary for propagation of the micro-organisms are admixed in a predeterminable ratio to the quantity of newly fed waste water.

7. Method according to one of claims 1 to 6, **characterised in that** neutralisation means are admixed when the fed waste water has a pH value outside a range of 3 to 12.

8. Arrangement for breaking down organic waste water pollutants, especially for carrying out the method according to one of claims 1 to 7; **characterised in that** a reaction chamber for treatment of the waste water loaded with pollutants is provided in a high reactor (1), the high reactor comprises means (6, 7) for feeding the waste water to be treated and means (19, 5) for regulated supply of air, means (14) for measuring the pH value of the treated waste water and means (15) for measuring the oxidation-reduction potential value of the treated waste water are provided, a process computer (30) is coupled with the means for measuring the pH value and the oxidation-reduction potential and with a setting element (19) controlling the supplied air quantity and is provided with a memory unit (33), and the process computer (30) is so constructed that it regulates the air quantity supplied to the waste water in dependence on the measured oxidation-reduction potential values (15) with guidance of the measured pH values (14) in accordance with a predetermined relationship stored in the memory unit (33).

9. Arrangement according to claim 8, **characterised in that** means (16) for measuring the temperature of the treated waste water and means (20, 21) for temperature setting of the treated waste water are coupled with the process computer (30).

10. Arrangement according to claim 8 or 9, **characterised in that** the waste water is circulated by way of a bypass duct (11), the bypass duct opens into the vicinity of the base of the reaction chamber in the high reactor and all measuring points (14 to 16) are arranged in the bypass duct.

11. Arrangement according to claim 10, **characterised in that** nutrient admetering means (25) and pH value neutralisation means (23, 24) are connected with the bypass duct (11).

12. Arrangement according to one of claims 8 to 11, **characterised in that** a pipe (3) open at both ends is installed vertically in the high reactor with a spacing all around and the pipe widens in funnel shape at the upper end.

13. Arrangement according to one of claims 8 to 12, **characterised in that** a sprinkler device for destroying foam bubbles is arranged above the filled level of the high reactor.

## Revendications

1. Procédé pour la décomposition de matières nocives des eaux usées en utilisant des bactéries suspendues librement,
où les eaux usées sont mises en circulation et aérées dans une enceinte de réaction,
où la quantité d'air amenée est réglée selon les conditions de traitement des eaux usées et
où des valeurs de potentiel redox et de pH sont surveillées,
caractérisé en ce
a) que sont déterminées des valeurs de potentiel redox associées à différentes valeurs pH, dans lesquelles les matières nocives dans le réacteur sont dégradées biologiquement d'une manière optimale ;
b) en ce qu'il est formé et stocké à partir des valeurs déterminées une ligne caractéristique ;
c) qu'il est formé à partir des valeurs pH (valeurs réelles pH) mesurées lors du fonctionnement et les valeurs de ligne caractéristique dans un calculateur de processus une grandeur de guidage et qu'elle est comparée avec des valeurs de potentiel redox (valeurs réelles de potentiel redox) mesurées lors du fonctionnement ; et
d) que la quantité d'air acheminée est réglée en fonction des valeurs réelles de potentiel redox sous le guidage des valeurs réelles de pH.

2. Procédé selon la revendication 1, **caractérisé en ce qu'**une quantité partielle des eaux usées est dérivée de l'enceinte de réaction, est guidée à travers une dérivation de mesure et de commande et est ramenée à un autre emplacement de nouveau dans l'enceinte de réaction ; et **en ce que** des variables de processus, par exemple des valeurs réelles de pH, de potentiel redox et de température sont mesurées dans la dérivation de mesure et de commande.

3. Procédé selon la revendication 2, **caractérisé en ce que** la température des eaux usées est réglée dans la dérivation de mesure et de commande.

4. Procédé selon la revendication 3, **caractérisé en ce que** les eaux usées sont maintenues dans l'enceinte de réaction à une température dans la plage de 20 à 40°C, de préférence entre 35 et 39°C.

5. Procédé selon l'une des revendications 1 à 4,
**caractérisé en ce qu'**il est utilisé comme enceinte de réaction un haut-réacteur dans la zone de fond duquel est acheminée la quantité d'air réglée sensiblement selon une répartition régulière et est mélangée avec les eaux usées en circulation à traiter.

6. Procédé selon l'une des revendications 1 à 5,
**caractérisé en ce que** sont ajoutées aux eaux usées des substances nutritives nécessaires pour la multiplication des micro-organismes selon un rapport prédéterminé à la quantité des eaux usées acheminées nouvellement.

7. Procédé selon l'une des revendications 1 à 6,
**caractérisé en ce que** des moyens de neutralisation sont ajoutés en les mélangeant lorsque les eaux usées acheminées ont une valeur pH à l'extérieur d'une plage de 3 à 12.

8. Agencement pour la décomposition de matières nocives des eaux usées, notamment pour la mise en oeuvre du procédé selon l'une des revendications 1 à 7, **caractérisé en ce qu'**il est prévu dans un haut-réacteur (1) une enceinte de réaction pour le traitement des eaux usées chargées en matières nocives ;
**en ce que** le haut-réacteur présente des moyens pour l'amenée des eaux usées à traiter (6, 7) et pour l'amenée réglée d'air (19, 5) ;
**en ce que** des moyens sont prévus pour mesurer la valeur pH (14) et la valeur de potentiel redox (15) des eaux usées traitées ;
**en ce qu'**un calculateur de processus (30) est couplé avec les moyens pour mesurer la valeur pH et le potentiel redox et avec un organe de réglage (19) commandant la quantité d'air acheminée et est équipé d'une installation de stockage (33) ; et
**en ce que** le calculateur de processus (30) est réalisé de façon qu'il règle la quantité d'air amenée aux eaux usées en fonction des valeurs de potentiel redox mesurées (15) sous le guidage des valeurs pH mesurées (14) selon un rapport prédéterminé stocké dans l'installation de stockage (33).

9. Agencement selon la revendication 8, **caractérisé en ce que** des moyens (16) pour mesurer la température des eaux usées traitées et des moyens (20, 21) pour le réglage de la température des eaux usées traitées sont couplés au calculateur de processus (30).

10. Agencement selon la revendication 8 ou 9 **caractérisé en ce que** les eaux usées sont mises en circulation par une conduite de dérivation (11), que la conduite de dérivation débouche au voisinage du fond de l'enceinte de réaction dans le haut-réacteur et que tous les emplacements de mesure (14 - 16) sont disposés dans la conduite de dérivation.

11. Agencement selon la revendication 10, **caractérisé en ce que** des moyens de dosage de substances nutritives (25) et des moyens de neutralisation de valeur pH (23, 24) sont reliés à la conduite de dérivation (11).

12. Agencement selon l'une des revendications 8 à 11, **caractérisé en ce qu'**un tube (3) ouvert des deux côtés est monté selon un écart tout autour verticalement dans le haut-réacteur et **en ce que** le tube s'élargit en forme de trémie à l'extrémité supérieure.

13. Agencement selon l'une des revendications 8 à 12, **caractérisé en ce qu'**il est disposé au-dessus du niveau de remplissage du haut-réacteur une installation d'arrosage pour détruire des bulles de mousse.
